# EUROPÄISCHE PATENTANMELDUNG

(11) **EP 0 670 432 A2**
(43) Veröffentlichungstag der Anmeldung: **06.09.1995**
(21) Anmeldenummer: 95102306.8
(22) Anmeldetag: 18.02.1995
(51) Int. Cl.: F16C 35/04

(54) **Lageranordnung zur Lagerung einer Welle**

(30) Priorität: 01.03.1994 DE 4406640
(71) Anmelder: DEERE & COMPANY, Moline, Illinois 61265 (US)
(72) Erfinder: Winkelmann, Harald, Dipl. Ing., D-64342 Seeheim-Jugenheim (DE); Schmitt, Bruno, Dipl. Ing., D-68623 Lampertheim (DE)
(74) Vertreter: Feldmann, Bernhard

(57) **Zusammenfassung**

Es wird eine Lageranordnung zur Lagerung einer durch radiale Kräfte belasteten Welle (22) mit einem die Welle (22) tragenden Wälzlager (16), welches von einer Lagerausnehmung (12) in einem Lagergehäuse (10) aufgenommen wird, beschrieben. Um die Lastverteilung auf die Wälzkörper (20) radial einseitig belasteter Lager (16) zu verbessern und um damit die Lagerlebensdauer zu - steigern, wird vorgeschlagen, die Gehäusesteifigkeit in der radialen Hauptkraftrichtung (F) gegenüber der Gehäusesteifigkeit anderer Richtungen zu reduzieren. Dies erfolgt beispielsweise durch eine das Lagergehäuse (10) axial durchbrechende Ausnehmung (40, 56, 58), die sich nahe der Lagerausnehmung (12) in Kraftrichtung (F) befindet. Die Ausnehmung kann als Schlitz (40) ausgebildet sein, der sich hinsichtlich der Umfangsrichtung des Wälzlagers (16) zu beiden Seiten der Kraftrichtung (F) erstreckt.

## Beschreibung

Die Erfindung betrifft eine Lageranordnung zur Lagerung einer insbesondere durch radiale Kräfte belasteten Welle mit einem die Welle tragenden Wälzlager, welches von einer Lagerausnehmung in einem Lagergehäuse aufgenommen wird.

Radial einseitig belastete Lager sind insbesondere aus dem Getriebebau bekannt. Bei Getrieben werden zwischen zwei oder mehr Wellen über Verzahnungen Drehmomente übertragen, wodurch sich zwischen den Wellen resultierende Kräfte ausbilden, die die miteinander wechselwirkenden Wellen im wesentlichen voneinander weg drücken. Dabei können die auf die Lager wirkenden Kraftrichtungen aus der Ebene abweichen, die durch die beteiligten Wellenachsen aufgespannt wird. Die Wellenlager nehmen die Kräfte auf und leiten diese in das Lagergehäuse ab.

Bei einer Lageranordnung, deren Welle einseitig radial belastet ist, ist die Last im allgemeinen nicht gleichmäßig auf alle Wälzkörper des Wälzlagers verteilt. Vielmehr tritt eine starke Überhöhung der Belastung an den Wälzkörpern auf, die jeweils im Bereich der Kraftrichtung unter Last stehen. Durch die maximal auftretende Belastung im Lager werden dessen Einsatzbereich und Lebensdauer begrenzt.

Insbesondere bei Wellen, die hohe Drehmomente übertragen, wie es beispielsweise bei Abtriebswellen von Fahrzeuggetrieben, beispielsweise von landwirtschaftlichen oder Arbeitsfahrzeugen der Fall ist, wird die Lagerdimensionierung im wesentlichen durch deren Belastung bestimmt. Entscheidend dabei sind die maximal auftretenden Kräfte an den sich jeweils in Kraftrichtung befindlichen Wälzkörpern des Lagers.

Durch die DE-A-41 15 217 ist eine Lagerungseinheit zur Lagerung der Abtriebswelle eines Schleppergetriebes bekannt geworden, die zur Abstützung radialer Kräfte eine Radiallageranordnung der eingangs genannten Art enthält, welche ein in einer Ausnehmung des Getriebegehäuses geführtes Radiallager aufweist. Die Lagerungseinheit enthält ferner eine Axiallagereinheit mit zwei axialen Zylinderrollenlagern, die sich über einen mit Lagergehäuse bezeichneten Flansch an dem Getriebegehäuse abstützen. Um eine gleichmäßige Belastung der Axiallagereinheit auch bei Durchbiegung der Welle zu erreichen, wird vorgeschlagen, an dem Flansch in dessen radialen Ringbereich zwischen der Anlage der Axiallagereinheit und dem Befestigungsbereich am Getriebegehäuse in Umfangsrichtung Abschnitte unterschiedlicher Steifigkeit vorzusehen. Die Steifigkeit des Flansches wird in solchen Umfangsbereichen vermindert, in denen die durch eine Wellendurchbiegung auftretende Hauptbelastung auftritt. Maßnahmen zur Dimensionierung der Radiallageranordnung werden nicht angegeben. Insbesondere wird das Problem nicht behandelt, wie einer Überhöhung der in der radialen Kraftrichtung liegenden Belastung an den zwischen einem inneren und einem äußeren Lagerring eingeschlossenen Wälzkörpern des Radiallagers entgegengewirkt werden könnte.

Das DE-GM-84 24 844 bezieht sich auf ein Flanschlager mit einem flächenförmigen Lagerträger und einer an diesem befestigten Lagerbuchse mit einer Laufschicht. Um den Lagerverschleiß gering zu halten, soll die Lagerbuchse koaxial zur in ihr gelagerten Welle liegen. Für eine Anpassung des Flanschlagers an Achsabweichungen wird vorgeschlagen, den Lagerträger aus einem die Lagerbuchse tragenden Teil und einem stationär zu befestigenden Basisteil auszubilden, wobei die beiden Teile durch einen verformbaren Steg miteinander verbunden sind. Die beiden Teile können durch eine nicht geschlossene ringförmige Ausnehmung voneinander getrennt sein. Wegen der Nachgiebigkeit dieser Lagerung eignet sie sich nicht als Lagerung für eine Getriebewelle, wo die radiale Verlagerung der Welle möglichst gering bleiben soll, um den Zahneingriff nicht ungünstig zu beeinflussen.

Durch die JP-A-4-25 621 wird eine Lagerung vorgeschlagen, die bei Temperaturänderungen formbeständig bleiben soll. Bei der Lagerung stützt sich eine aus Aluminium bestehende Spindelnabe über ein Kugellager auf einer feststehenden Welle ab. Ein ringförmiger, konzentrisch das Kugellager umgebender Schlitz ist derart in die Spindelnabe eingelassen, daß sich ein dünnes, auf der Umfangsfläche des Kugellagers anliegendes zylindrisches Teil ausbildet. Bei einer Temperaturerhöhung dehnt sich die Aluminiumnabe stärker aus als das Kugellager. Die Schrumpfung soll durch eine Verformung des zylindrischen Teils ausgeglichen werden. Wie auf das Lager wirkende einseitig überhöhte Kräfte beherrscht werden könnten, ist der Druckschrift nicht zu entnehmen.

Die der Erfindung zugrunde liegende Aufgabe wird darin gesehen, eine Lageranordnung der eingangs genannten Art anzugeben, durch die einseitig überhöhte radiale Kräfte beherrscht werden und die Lagerlebensdauer auch bei Verwendung relativ kleiner Wälzlager verlängerbar ist.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Die wesentliche Lehre der Erfindung besteht darin, die Lastverteilung auf die Wälzkörper des Wälzlagers zu verbreitern und dadurch die Pressung der am stärksten belasteten Wälzkörper zu vermindern. Dies geschieht dadurch, daß die Gehäusesteifigkeit in der radialen Kraftrichtung gegenüber der Gehäusesteifigkeit anderer radialer Richtungen reduziert wird. Durch diese Maßnahme bleibt die Gehäusesteifigkeit grundsätzlich erhalten. Durch eine gezielte Vergrößerung der Gehäusenachgiebigkeit im Bereich der auf das Lager wirkenden Kraftrichtung kann jedoch die Lastverteilung im Lager verbreitert werden, so daß mehr Wälzkörper am Tragen beteiligt sind und die mittlere Belastung des in Kraftrichtung liegenden Wälzkörpers reduziert wird.

Durch die erfindungsgemäße Lageranordnung wird die Last auf mehrere Wälzkörper annähernd gleichmäßig verteilt. Dadurch kann die mittlere Belastung des zentralen, in Kraftrichtung liegenden Wälzkörpers beispielsweise um 20 % reduziert werden. Dies führt zu einer erheblichen Erhöhung der Lebensdauer des Lagers, so daß gegenüber konventionellen Konstruktionen kleinere, kostengünstigere Lager eingesetzt werden können.

Die erfindungsgemäße Lageranordnung findet in besonders vorteilhafter Weise dort Anwendung, wo in Laufversuchen an Prototypen oder dergleichen hohe Belastungen der Lagerung festgestellt werden, die vermieden werden sollen. Oft sind grundlegende Änderungen an der Konstruktion wegen des Fortschritts der Entwicklungsarbeiten oder aus Raumgründen oder Kostenvorgaben nicht mehr erwünscht. Durch eine Verbesserung der Krafteinleitung, wie sie die Erfindung vorschlägt, können Belastungsüberhöhungen verringert werden. Die hierfür erforderlichen Maßnahmen können ohne grundlegende Änderung der Lagerkonstruktion vorgenommen werden.

Die Verringerung der Gehäusesteifigkeit in der radialen Kraftrichtung läßt sich vorzugsweise durch wenigstens eine das Lagergehäuse axial durchbrechende Ausnehmung erreichen, die sich in radialer Hinsicht in der Nähe der Lagerausnehmung und im Bereich der Kraftrichtung befindet.

Zweckmäßigerweise ist diese Ausnehmung im wesentlichen als axial durchgängiger halbringförmiger Schlitz ausgebildet, der hinsichtlich der Umfangsrichtung des Wälzlagers sich bereichsweise zu beiden Seiten der Kraftrichtung erstreckt. Der Schlitz braucht keine konstante Breite aufzuweisen. Form und Breite des Schlitzes können weitgehend auf die Fertigungsmöglichkeiten abgestimmt sein.

Bei der Welle eines Schaltgetriebes, die infolge eines Umschaltens zwischen verschiedenen Gängen in mehreren radialen Kraftrichtungen belastet werden kann, wird für die Auslegung der Ausnehmung die Hauptkraftrichtung, d. h. die Richtung, in der die höchste Belastung zu erwarten ist, bevorzugt berücksichtigt. Die Belastungsrichtungen des Getriebes lassen sich insbesondere durch Rechenprogramme ermitteln.

Die konkrete Auslegung der Ausnehmung kann auf Versuche oder auf Berechnungen nach der Methode der finiten Elemente gestützt werden. Sie folgt insbesondere den Kriterien, daß unter Berücksichtigung der Fertigungsmöglichkeiten zum einen die radiale Verlagerung der Welle möglichst gering bleiben soll, um den Zahneingriff nicht nachteilig zu beeinflussen, und zum anderen alle möglichen Kraftrichtungen deutlich innerhalb des Öffnungswinkels der Ausnehmung bzw. des Schlitzes liegen.

Gemäß einer bevorzugten Ausgestaltung der Erfindung ist die axiale Ausnehmung innerhalb eines Winkelbereichs konzentrisch zur Lagerachse des Wälzlagers derart ausgebildet, daß zwischen Lagerausnehmung und axialer Ausnehmung ein Steg, vorzugsweise konstanter radialer Breite ausgebildet ist. Die erforderliche Stegbreite hängt einerseits von der resultierenden Belastung des Lagers ab. Andererseits wird die Breite der in Umfangsrichtung tragenden Lastzone durch die Stegbreite beeinflußt. Unter Berücksichtigung der üblichen Fertigungsmöglichkeiten ist die Ausbildung einer möglichst geringen Stegbreite vorteilhaft, da dies zu einem nachgiebigen Gehäuse in Kraftrichtung und einer breiten Lastverteilung auf viele Wälzkörper führt. Bei gegossenen Lagergehäusen kann eine Stegbreite von 10 mm optimal sein, sie wird für den besonderen Anwendungsfall berechnet oder empirisch ermittelt.

Anstelle eines Steges konstanter Dicke und eines ringförmigen Schlitzes, dessen mittlerer Bereich in Kraftrichtung liegt, kann auch ein gerader Schlitz oder ein Winkelschlitz der Verringerung der Gehäusesteifigkeit dienen.

Es hat sich als vorteilhaft erwiesen, wenn die axiale Ausnehmung sich in Umfangsrichtung über einen Winkelbereich zwischen 90° und 130° erstreckt. Die Hauptbelastungsrichtung verläuft dabei in etwa durch den hinsichtlich der Umfangsrichtung mittleren Bereich der axialen Ausnehmung. Ist lediglich eine Kraftrichtung zu berücksichtigen, so liegt der optimale Winkelbereich zwischen 90° bis 100°. Wirken hingegen mehrere Kraftrichtungen auf die Welle, so ist die Auswahl eines Winkelbereichs zwischen 100° und 120° zweckmäßig.

Bei der Auslegung sollte darauf geachtet werden, daß die Oberflächen der Ausnehmung oder des Schlitzes so bemessen und gestaltet sind, daß überhöhte Spannungen vermieden werden. Beispielsweise können bei einem relativ schmalen Schlitz dessen Endbereiche verbreitert und abgerundet ausgebildet sein.

Mit zunehmender Lagerluft nimmt die erwartete Belastung des jeweiligen zentralen, in Kraftrichtung liegenden Wälzlagers zu, da sich die Lastzone über einen abnehmenden Winkelbereich erstreckt. Bei normalen Einbauverhältnissen und normaler Lagerluft (Lagerspiel) kann sich die Lastzone über einen Winkel von rund 150° erstrecken. Ohne Lagerluft ist der theoretische Wert 180°. Zweckmäßigerweise wird für die erfindungsgemäße Lageranordnung ein Wälzlager mit möglichst geringer Lagerluft ausgewählt, um die Lagerbelastung auf eine möglichst breite Lastzone zu verteilen.

Vorzugsweise findet ein Wälzlager mit einem von der Lagerausnehmung des Lagergehäuses aufgenommenen Lageraußenring Anwendung, der entsprechend weich ausgebildet ist, um die Verformungen des Lagergehäuses infolge der radialen Ausnehmung auf die Lauffläche der Wälzkörper zu übertragen.

Auch wenn die Erfindung grundsätzlich für Lageranordnungen mit beliebigen Wälzlagern geeignet ist, wirkt sie sich besonders vorteilhaft bei der Verwendung von Rollenlagern, insbesondere von Zylinderrollenlagern aus. Die Ursache hierfür liegt darin, daß bei einer einseitigen Belastung der Welle diese sich durchbiegt, so daß die Rollen des Rollenlagers in ihrer axialen Richtung sehr unterschiedlich belastet werden. Die Rollen werden insbesondere an den Kanten besonders hoch belastet. Es hat sich gezeigt, daß sich diese Belastungsunterschiede entlang der Rollenachsen durch die erfindungsgemäße axiale Ausnehmung im Lagergehäuse im wesentlichen beseitigen lassen. Es wurde keine unterschiedliche axiale Verteilung der Kräfte entlang der Rollenachse festgestellt. Die örtliche Belastung der Rollen und deren Laufbahn ist wesentlich geringer und gleichmäßiger als in einem steif ausgebildeten Lagergehäuse, da der Steg so nachgiebig ist, daß er der Wellenneigung an der Lagerstelle folgen kann. Dadurch kann sich auch der Lageraußenring anpassen bzw. verformen, so daß die Rollen gleichmäßiger über ihre Länge tragen. Durch die Ausnehmung im Lagergehäuse wird das Tragen der Wälzkörper an den Kanten vermieden, und es muß nicht, wie sonst üblich, die Lagerluft vergrößert werden. Weniger Lagerluft führt jedoch, wie bereits beschrieben wurde, zu einer Verbesserung der Lastverteilung auf die einzelnen Wälzkörper.

Anhand der Zeichnung, die Ausführungsbeispiele der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: ein flanschartiges Lagergehäuse mit Wellenlagerausnehmung und erfindungsgemäßer axialer, das Lagergehäuse durchbrechender Ausnehmung,
- Fig. 2: die Längsschnittansicht einer in einem Lagergehäuse gemäß Fig. 1 gelagerten Ausgangswelle eines Schaltgetriebes,
- Fig. 3: ein Rollenlager mit auf der Kraftrichtungsseite angeordnetem Schlitz im Wellengehäuse,
- Fig. 4: die Lastverteilung auf die Rollen des Rollenlagers gemäß Fig. 3,
- Fig. 5: den Schnitt durch einen Teilbereich eines Rollenlagers, dessen Rollen einenends durch eine durchgebogene Welle belastet sind, mit einem Lagergehäuse gemäß dem Stand der Technik,
- Fig. 6: einen Schnitt wie in Fig. 5 dargestellt, jedoch mit einer erfindungsgemäßen Ausbildung des Lagergehäuses,
- Fig. 7: die Lastverteilung längs der Rollenachse,
- Fig. 8: die Ausbildung eines konzentrisch zum Wellenlager angeordneten ringförmigen Schlitzes,
- Fig. 9: die Ausbildung eines neben dem Wellenlager angeordneten geraden Schlitzes,
- Fig. 10: die Ausbildung eines neben dem Wellenlager angeordneten abgewinkelten Schlitzes.

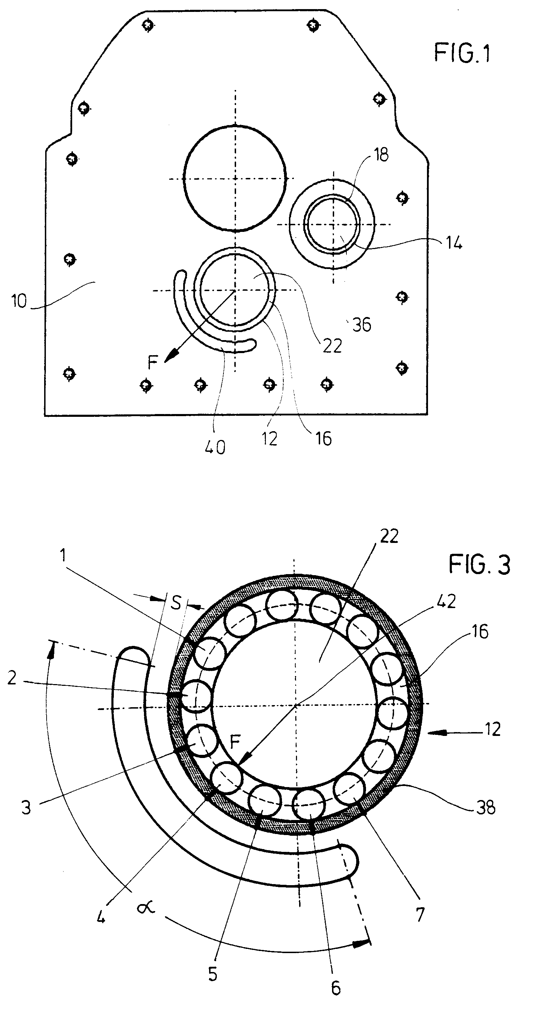

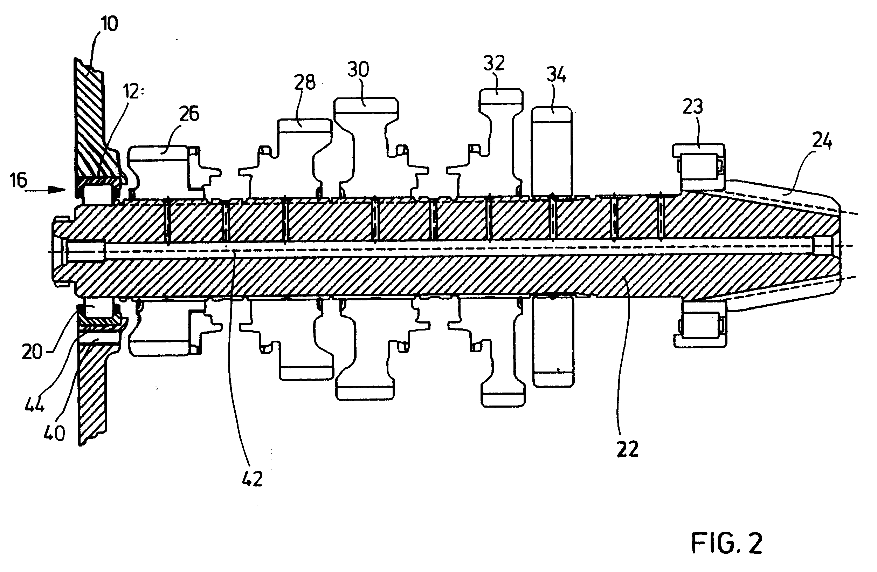

Fig. 1 zeigt die stirnseitige Ansicht des Lagergehäuses 10 eines Gruppenschaltgetriebes für einen Ackerschlepper. Durch die Wandung des Lagergehäuses 10 erstreckt sich eine erste Lagerbohrung oder Lagerausnehmung 12 sowie eine zweite Lagerausnehmung 14. In die Lagerausnehmungen 12, 14 sind Wälzlager 16, 18 eingesetzt. Wie aus Fig. 2 hervorgeht, rollen die Rollen 20 der Wälzlager 16 unmittelbar auf der Wellenlaufbahn im Bereich eines der Enden einer Getriebewelle 22 ab. Das andere Ende der Getriebewelle 22 wird durch ein kombiniertes Radial- und Axiallager, von dem jedoch lediglich der Radialteil 23 angedeutet wurde, getragen.

Bei der Getriebewelle 22 handelt es sich um die Abtriebswelle eines Gruppenschaltgetriebes, welche an einem Ende ein Kegelrad 24 für den Antrieb des Tellerrades eines nicht gezeigten Differentialgetriebes aufweist. Die Getriebewelle 22 trägt fünf Zahnräder 26, 28, 30, 32 und 34. Die Zahnräder 26, 28, 30 und 32 lassen sich über Schaltmuffen wahlweise mit korrespondierenden Zahnrädern einer in dem Wälzlager 18 gelagerten nicht näher gezeigten Nebenwelle 36 kraftschlüssig verbinden, so daß unterschiedliche Übertragungsverhältnisse des Getriebes einstellbar sind. Das Zahnrad 34 ist ein Abtriebszahnrad für den nicht dargestellten Vorderradantrieb.

Durch den jeweiligen Zahneingriff der Zahnräder 26, 28, 30, 32 und 34 wird die Getriebewelle 22 einseitig radial belastet. Die resultierenden Belastungen und Kraftrichtungen lassen sich durch ein Rechenprogramm ermitteln. Sie können für jeden Zahneingriff unterschiedlich sein. Eine resultierende Kraftrichtung wurde in Fig. 1 durch den Pfeil F angedeutet. Es soll sich hierbei um die Hauptbelastungsrichtung handeln, die sich für die höchste Belastung des Lagers 16 bei Berücksichtigung unterschiedlicher Zahneingriffe ergibt. Die Belastung der Welle 22 führt zu deren Durchbiegung und Schiefstellung an den Lagern 16, 23. Die resultierende Wellenneigung an dem Wälzlager 16 kann einige (beispielsweise 4) Winkelminuten betragen.

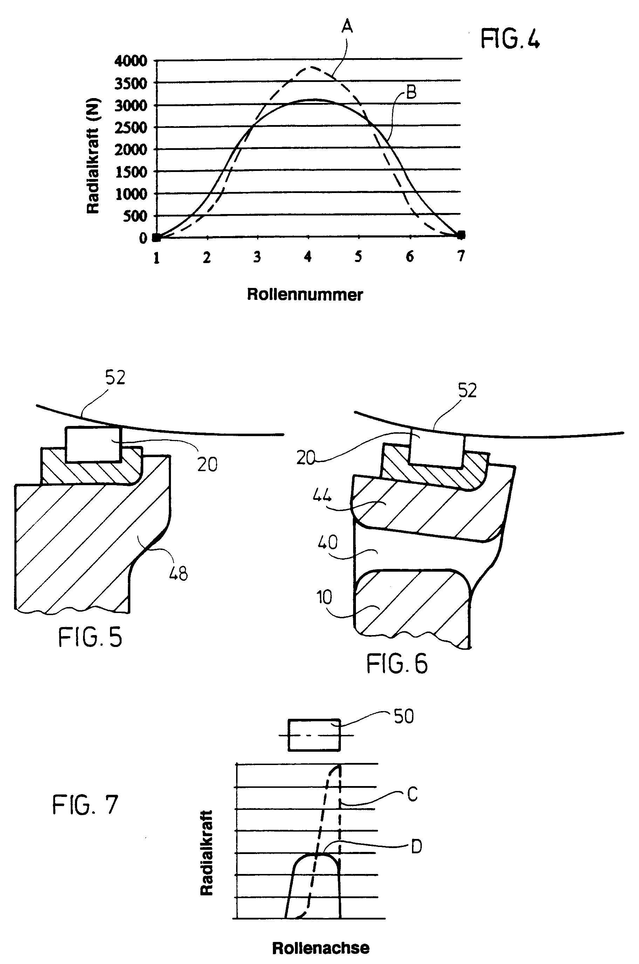

Das in Fig. 3 dargestellte Wälzlager 16 enthält vierzehn Rollen, die unmittelbar auf einer zylindrischen Lagerlaufbahn der Getriebewelle 22 und in einem Lageraußenring 38 abrollen. Aufgrund der Hauptbelastungsrichtung F ergibt sich für ein konventionell ausgebildetes, steifes Lagergehäuse eine Lastverteilung auf die Rollen 1 bis 7 gemäß der gestrichelten Linie A in Fig. 4. Es ist ersichtlich, daß sich für die in der Hauptbelastungsrichtung F liegende Rolle 4 eine starke Belastungsüberhöhung ergibt, die zu den benachbarten Rollen 3, 2 und 1 bzw. 5, 6 und 7 rasch abfällt.

Die Gehäusesteifigkeit des Lagergehäuses 10 gemäß Fig. 1 oder 3 ist in der Nähe des Wellenlagers 16 in Richtung der Hauptbelastungsrichtung F reduziert. Eine Erhöhung der Gehäusenachgiebigkeit wird durch eine axiale Durchbrechung des Lagergehäuses erreicht, die im beschriebenen Ausführungsbeispiel als sich durch die ganze Wellenlagerwandstärke erstreckende halbkreisförmige Nut 40 ausgebildet ist. Die Nut 40 weist eine konstante radiale Breite auf und erstreckt sich konzentrisch um die Wellenachse 42 über einen Winkelbereich α von ca. 110°. Zwischen der Nut 40 und dem Lageraußenring 38 ist ein Steg 44 konstanter radialer Breite S ausgebildet.

Durch die Vergrößerung der Gehäusenachgiebigkeit ergibt sich eine Lastverteilung auf die Rollen 1 bis 7 gemäß der durchgezogenen Linie B in Fig. 4. Es ist ersichtlich, daß die Verteilung der Kräfte im nachgiebigen Lagergehäuse 10 mit Schlitz 40 (Linie B der Fig. 4) wesentlich flacher und breiter als im konventionell ausgebildeten Lagergehäuse (Linie A der Fig. 4) ist. Dies bedeutet, daß beim nachgiebigen Lagergehäuse 10 mit Schlitz 40 die tragende Lastzone breiter ist und mehr Rollen am Tragen beteiligt werden, so daß die mittlere Belastung der zentralen, in Hauptkraftrichtung F liegenden Rolle 4 reduziert ist.

Berechnungen und Versuche haben gezeigt, daß die Breite der tragenden Lastzone mit abnehmender Breite S des Stegs 44 zunimmt. Die Breite S des Steges 44 sollte daher so gering wie möglich gewählt werden. Sie kann aber aus Fertigungsgründen bei Fahrzeuggetriebegehäusen 10 aus Gußmetall kaum geringer als 10 mm ausgeführt werden.

Die Reduzierung der Belastung der zentralen Rolle 4 liegt im vorliegenden Beispiel bei 20 %. Die maximale Rollenbelastung ist entscheidend für die Lagerlebensdauer. Da die Belastung der Rollen bei einer Berechnung der Lebensdauer mit einem Exponenten versehen ist, führt eine Reduzierung der Belastung um 20 % zu einer überdurchschnittlichen Erhöhung der Lagerlebensdauer, die sich im vorliegenden Fall einer Abschätzung zufolge mehr als verdoppelt.

Es hat sich herausgestellt, daß die Variation des Öffnungswinkels α einen relativ geringen Einfluß auf die maximale Rollenkraft hat. Es ist deshalb sinnvoll, den Schlitz 40 so anzulegen, daß sich alle vorhandenen Kraftrichtungen, die sich aus unterschiedlichen Zahneingriffen der Welle 22 ergeben, innerhalb des Öffnungswinkels α des Schlitzes 40 befinden. Der Öffnungswinkel α des Schlitzes 40 sollte jedoch 130° nicht überschreiten.

In den Fig. 5 und 6 ist das Tragen der Wälzkörper 20 über ihre axiale Erstreckung bei Wellendurchbiegungen dargestellt. Fig. 5 zeigt eine Anordnung mit konventionellem Lagergehäuse 48, das steif ausgebildet ist. Die Wälzkörper 20 rollen lediglich mit einem axialen Endbereich bzw. ihren Kanten auf der Laufbahn 52 der Welle 22 ab. Dies führt zu unterschiedlichen Belastungen der Rollen 20 in ihrer axialen Richtung, wie es durch die gestrichelte Linie C in Fig. 7 angedeutet wurde.

Für das nachgiebig gestaltete Lagergehäuse 10 mit Schlitz 40 wurde dagegen keine unterschiedliche axiale Verteilung der Kräfte entlang der Rollen 20 festgestellt. Hier kommt es nicht mehr zu einer stärkeren Belastung an den Kanten der Wälzköper 20. Die örtliche Belastung der Rollen 20 und der Laufbahn 52 der Welle 22 ist dadurch wesentlich geringer und gleichmäßiger als bei dem konventionellen, steifen Lagergehäuse 48. Dies hat seine Ursache darin, daß der Steg 44 so nachgiebig ist, daß er der Wellenneigung an der Lagerstelle folgen kann. Dadurch kann sich auch der Lageraußenring 38 anpassen, so daß die Rollen 20 gleichmäßiger über ihre Länge tragen. Dies ist durch die durchgezogene Linie D in Fig. 7 dargestellt.

Auch wenn die Erfindung lediglich anhand einiger Ausführungsbeispiele beschrieben wurde, erschließen sich für den Fachmann im Lichte der vorstehenden Beschreibung viele verschiedenartige Alternativen, Modifikationen und Varianten, die unter die vorliegende Erfindung fallen.

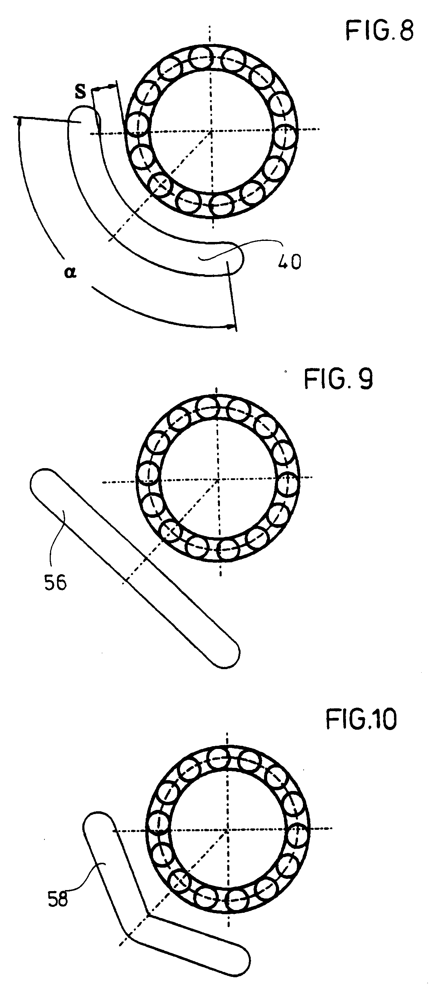

So zeigen z. B. die Fig. 8, 9 und 10 unterschiedliche Schlitzformen, durch die eine Herabsetzung der Gehäusesteifigkeit in der Kraftrichtung erreichbar ist. Neben dem bereits beschriebenen und in Fig. 8 dargestellten kreisabschnittsförmigen Schlitz 40 sind auch ein gerader Schlitz 56 (Fig. 9) und ein abgewinkelter Schlitz 58 (Fig. 10) geeignet, um die Gehäusesteifigkeit in Lastrichtung herabzusetzen.

## Patentansprüche

1. Lageranordnung zur Lagerung einer durch radiale Kräfte belasteten Welle (22) mit einem die Welle (22) tragenden Wälzlager (16), welches von einer Lagerausnehmung (12) in einem Lagergehäuse (10) aufgenommen wird, dadurch gekennzeichnet, daß die Gehäusesteifigkeit in der radialen Hauptkraftrichtung gegenüber der Gehäusesteifigkeit anderer Richtungen reduziert ist, um die Lastverteilung auf die Wälzkörper (1 bis 7, 20, 50) des Wälzlagers (16) zu verbreitern.

2. Lageranordnung nach Anspruch 1, dadurch gekennzeichnet, daß sich in der Nähe der Lagerausnehmung (12) in Hauptkraftrichtung wenigstens eine das Lagergehäuse (10) axial durchbrechende Ausnehmung (40, 56, 58) befindet.

3. Lageranordnung nach Anspruch 2, dadurch gekennzeichnet, daß die axiale Ausnehmung im wesentlichen als Schlitz (40) ausgebildet ist, der sich hinsichtlich der Umfangsrichtung des Wälzlagers (16) zu beiden Seiten der radialen Hauptkraftrichtung erstreckt.

4. Lageranordnung nach Anspruch 2 oder 3, dadurch gekennzeichnet, daß die axiale Ausnehmung (40, 56, 58) innerhalb eines Winkelbereichs das Wälzlager (16) konzentrisch umgibt, so daß zwischen Lagerausnehmung (12) und axialer Ausnehmung (40, 56, 58) ein Steg (44), vorzugsweise konstanter radialer Breite (S) ausgebildet ist.

5. Lageranordnung nach Anspruch 4, dadurch gekennzeichnet, daß unter Berücksichtigung der üblichen Fertigungsmöglichkeiten eine möglichst geringe Stegbreite (S) gewählt ist.

6. Lageranordnung nach einem der Ansprüche 2 bis 5, dadurch gekennzeichnet, daß die axiale Ausnehmung (40, 56, 58) bezüglich der Lagerachse (42) innerhalb eines Winkelbereichs zwischen 90° und 130° liegt, wobei die Hauptbelastungsrichtung (F) durch den mittleren Bereich der axialen Ausnehmung (40, 56, 58) verläuft.

7. Lageranordnung nach einem der Ansprüche 2 bis 6, dadurch gekennzeichnet, daß die Oberflächen in den Abrundungen der axialen Ausnehmung (40, 56, 58) so bemessen und gestaltet sind, daß hier keine überhöhten Spannungen auftreten.

8. Lageranordnung nach einem der Ansprüche 1 bis 7, dadurch gekennzeichnet, daß ein Wälzlager (16) mit geringer Lagerluft ausgewählt ist.

9. Lageranordnung nach einem der Ansprüche 1 bis 8, dadurch gekennzeichnet, daß der an der Lagerausnehmung (12) anliegende Lageraußenring (38) des Wälzlagers (16) so weich ausgebildet ist, daß er Verformungen des Lagergehäuses (10) folgen kann.

10. Lageranordnung nach einem der Ansprüche 1 bis 9, dadurch gekennzeichnet, daß das Wälzlager (16) ein Rollenlager, insbesondere ein Zylinderrollenlager ist.
